# EUROPÄISCHE PATENTANMELDUNG

(11) **EP 3 388 775 A1**
(43) Veröffentlichungstag der Anmeldung: **17.10.2018**
(21) Anmeldenummer: 17020146.1
(22) Anmeldetag: 10.04.2017
(51) Int. Cl.: F28F 27/02, F25J 3/04, F28D 9/00, G05D 23/13, G05D 23/19

(54) **VERFAHREN ZUM BETREIBEN EINES WÄRMETAUSCHERS UND GEEIGNETER WÄRMETAUSCHER**

(71) Anmelder: Linde Aktiengesellschaft, 80331 München (DE)
(72) Erfinder: Lehmacher, Axel, 82544 Egling-Moosham (DE); Garthe, Daniel, 82515 Wolfratshausen (DE); Bub, Andreas, 81379 München (DE); Krebs, Benjamin, 82223 Eichenau (DE)
(74) Vertreter: Meilinger, Claudia Sabine

(57) **Zusammenfassung**

Die vorliegende Erfindung betrifft ein Verfahren zum Betreiben eines Wärmetauschers und einen geeigneten Wärmetauscher (50) mit Leitungen zur Durchleitung mindestens zweier Ströme durch den Wärmetauscher, wobei eine erste Eingangsleitung (100) für einen ersten Eingangsstrom (10) vorhanden ist, wobei die erste Eingangsleitung (100) vor Durchgang durch den Wärmetauscher in eine erste Durchgangsleitung (110) für einen ersten Durchgangsstrom (11) und eine erste Bypassleitung (120) für einen ersten Bypassstrom (12) aufgeteilt ist, wobei die erste Durchgangsleitung (110) durch den Wärmetauscher geführt ist und die erste Bypassleitung (120) außerhalb des Wärmetauschers geführt ist, und wobei eine zweite Eingangsleitung (200) für einen zweiten Eingangsstrom (20) vorhanden ist, wobei die zweite Eingangsleitung (200) vor Durchgang durch den Wärmetauscher in eine zweite Durchgangsleitung (210) für einen zweiten Durchgangsstrom (21) und eine zweite Bypassleitung (220) für einen zweiten Bypassstrom (22) aufgeteilt ist, wobei die zweite Durchgangsleitung (210) durch den Wärmetauscher geführt ist und die zweite Bypassleitung (220) außerhalb des Wärmetauschers geführt ist, wobei die erste Durchgangsleitung (110) nach Austritt aus dem Wärmetauscher (50) mit der ersten Bypassleitung (120) zu einer ersten Ausgangsleitung (100') zusammengelegt ist und/oder die zweite Durchgangsleitung (210) nach Austritt aus dem Wärmetauscher mit der zweiten Bypassleitung (220) zu einer zweiten Ausgangsleitung (200') zusammengelegt ist, wobei der erste und der zweite Durchgangsstrom (11, 21) im Wärmetauscher (50) miteinander in Wärmetausch treten. Hierdurch lassen sich Temperaturdifferenzen im Wärmetauscher effektiv begrenzen.

## Beschreibung

Die Erfindung betrifft ein Verfahren zum Betreiben eines Wärmetauschers, durch den mindestens zwei Ströme geleitet werden, sowie ein entsprechend geeigneter Wärmetauscher mit Leitungen zur Durchleitung mindestens zweier Ströme durch den Wärmetauscher.

### Stand der Technik

Eine übliche Methode zur Regelung der Temperatur am Austritt eines Wärmetauschers, wie bspw. eines Mehrstromwärmetauschers (z.B. Aluminiumplattenwärmetauscher) oder eines anderen Wärmetauschers, ist es, vor Eintritt in den Wärmetauscher eine Teilmenge eines zur Regelung geeigneten Stromes vom Gesamtstrom zu entnehmen, den verbleibenden Teil durch den Wärmetauscher zu führen (Durchgangsstrom) und die entnommene Teilmenge am Wärmetauscher vorbeizuführen (Bypassstrom), um dann die Teilströme (Durchgangsstrom und Bypassstrom) wieder zu vermischen. Dadurch ist es möglich, die übertragene Wärmemenge zu reduzieren und die Mischtemperatur zu beeinflussen bzw. zu regeln. Diese Art der Temperaturregelung kann für einen kalten Strom oder für einen warmen Strom benutzt werden.

Diese bekannte Regelung führt dazu, dass sich innerhalb des Wärmetauschers die Temperaturdifferenz zwischen den Strömen örtlich verkleinert, nämlich üblicherweise an dem Ende, an dem der Durchgangsstrom den Wärmetauscher verlässt. An dem Ende, an dem der Durchgangsstrom in den Wärmetauscher geführt wird, vergrößert sich jedoch üblicherweise die Temperaturdifferenz zwischen den Strömen.. Dies kann insbesondere bei Aluminiumplattenwärmetauschern und insbesondere im Teillastbetrieb zu hohen thermischen Spannungen führen, die die Alterung des Wärmetauschermaterials sowie der Verbindungsstellen beschleunigen und somit zu Schäden führen können.

Der Erfindung liegt somit das Problem zugrunde, einen Wärmetauscher sowie ein Verfahren zum Betreiben eines solchen anzugeben, bei dem die thermischen Spannungen herabgesetzt und die Lebensdauer erhöht ist.

### Kurzfassung der Erfindung

Erfindungsgemäß werden ein Verfahren zum Betreiben eines Wärmetauschers sowie ein solcher Wärmetauscher gemäß den unabhängigen Patentansprüchen vorgeschlagen. Vorteilhafte Ausführungen ergeben sich aus den jeweiligen Unteransprüchen und der nachfolgenden Beschreibung.

Die vorliegende Erfindung schlägt gemäß einem ersten Aspekt ein Verfahren zum Betreiben eines Wärmetauschers, durch den mindestens zwei Ströme geleitet werden, vor, wobei ein erster Eingangsstrom zumindest zeitweise vor Durchgang durch den Wärmetauscher in einen ersten Durchgangsstrom und einen ersten Bypassstrom aufgeteilt wird, wobei der erste Durchgangsstrom durch den Wärmetauscher geleitet und der erste Bypassstrom an dem Wärmetauscher vorbeigeführt wird, und wobei ein zweiter Eingangsstrom zumindest zeitweise vor Durchgang durch den Wärmetauscher in einen zweiten Durchgangsstrom und einen zweiten Bypassstrom aufgeteilt wird, wobei der zweite Durchgangsstrom durch den Wärmetauscher geleitet und der zweite Bypassstrom an dem Wärmetauscher vorbeigeführt wird, und wobei nach Durchgang durch den Wärmetauscher der erste Durchgangsstrom mit dem ersten Bypassstrom in einen ersten Ausgangsstrom zusammengeführt wird und/oder der zweite Durchgangsstrom mit dem zweiten Bypassstrom in einen zweiten Ausgangsstrom zusammengeführt wird, und wobei der erste und der zweite Durchgangsstrom im Wärmetauscher miteinander in Wärmetausch treten bzw. sind.

Gemäß einem zweiten Aspekt schlägt die vorliegende Erfindung einen Wärmetauscher mit Leitungen zur Durchleitung mindestens zweier Ströme durch den Wärmetauscher vor, wobei eine erste Eingangsleitung für einen ersten Eingangsstrom vorhanden ist, wobei die erste Eingangsleitung vor Durchgang durch den Wärmetauscher in eine erste Durchgangsleitung für einen ersten Durchgangsstrom und eine erste Bypassleitung für einen ersten Bypassstrom aufgeteilt ist, wobei die erste Durchgangsleitung durch den Wärmetauscher hindurch geführt ist und die erste Bypassleitung außerhalb des Wärmetauschers geführt ist, , und wobei eine zweite Eingangsleitung für einen zweiten Eingangsstrom vorhanden ist, wobei die zweite Eingangsleitung vor Durchgang durch den Wärmetauscher in eine zweite Durchgangsleitung für einen zweiten Durchgangsstrom und eine zweite Bypassleitung für einen zweiten Bypassstrom aufgeteilt ist, wobei die zweite Durchgangsleitung durch den Wärmetauscher hindurch geführt ist und die zweite Bypassleitung außerhalb des Wärmetauschers geführt ist, wobei die erste Durchgangsleitung nach Austritt aus dem Wärmetauscher mit der ersten Bypassleitung zu einer ersten Ausgangsleitung zusammengelegt ist und/oder die zweite Durchgangsleitung nach Austritt aus dem Wärmetauscher mit der zweiten Bypassleitung zu einer zweiten Ausgangsleitung zusammengelegt ist, wobei die erste Durchgangsleitung und die zweite Durchgangsleitung derart im Wärmetauscher angeordnet sind, dass der erste und der zweite Durchgangsstrom im Wärmetauscher miteinander in Wärmetausch treten bzw. sind.

### Vorteile der Erfindung

Zweckmäßigerweise werden der erste Eingangsstrom und der zweite Eingangsstrom im Gegenstrom durch den Wärmetauscher geleitet, das heisst der erste Eingangsstrom tritt an einer ersten Seite des Wärmetauschers in diesen ein, während der zweite Eingangsstrom an einer anderen zweiten Seite des Wärmetauschers in diesen geleitet wird. Diese zweite Seite liegt insbesondere der ersten Seite gegenüber. In einem solchen Fall tritt insbesondere der erste Ausgangsstrom an der zweiten Seite des Wärmetauschers aus, während der zweite Ausgangsstrom an der ersten Seite des Wärmetauschers austritt. Im Folgenden soll ohne Beschränkung der Allgemeinheit zur besseren Verständlichkeit der Erfindung von diesem Fall ausgegangen werden.

Durch den zweiten Bypassstrom mit der zugehörigen zweiten Bypassleitung können erfindungsgemäß die Temperaturdifferenzen im Wärmetauscher auf einem geringeren Niveau gehalten werden als im Stand der Technik. Dadurch werden hohe thermische Spannungen vermieden, die Haltbarkeit des Wärmetauschers verbessert und Schäden verhindert. Es sei darauf hingewiesen, dass der zweite Bypassstrom bzw. die zweite Bypassleitung zur Temperatur- bzw. Leistungsregelung des Wärmetauschers nicht erforderlich ist.

Weiterhin steht der zweite Bypassstrom bzw. die zweite Bypassleitung nicht zwangsläufig im Eingriffmit der ersten Bypassleitung bzw. dem ersten Bypassstrom.Die Menge des zweiten Bypassstroms muss nicht kontinutierlich geregelt werden, wie es der Fall ist, wenn der Istwert der Zielgrösse dem eingestellten Sollwert (exakt) entsprechen soll. Vielmehr ist es hinreichend, wenn die Menge des Bypassstroms nur dann verändert wird, wenn der Istwert der Zielgrösse einen bestimmten Grenzwert übersteigt (ein sogenannter set point high controller). Es ist von Vorteil, wenn in Abhängigkeit von bestimmten Messgrößen, auf die weiter unten eingegangen werden wird, zumindest zeitweise der zweite Bypassstrom erzeugt wird bzw. fließt bzw. die zweite Bypassleitung geöffnet wird.

Erfindungsgemäß kann nach Durchgang durch den Wärmetauscher der erste Durchgangsstrom mit dem ersten Bypassstrom in einen ersten Ausgangsstrom zusammengeführt werden und der zweite Durchgangsstrom mit dem zweiten Bypassstrom in einen zweiten Ausgangsstrom zusammengeführt werden. Es sind jedoch auch Ausführungsformen praktikabel, bei denen entweder nur der erste Durchgangsstrom mit dem ersten Bypassstrom in einen ersten Ausgangsstrom oder nur der zweite Durchgangsstrom mit dem zweiten Bypassstrom in einem zweiten Ausgangsstrom zusammengeführt wird. In diesem Fall ist der erste Bypassstrom oder der zweite Bypassstrom nicht mit dem entsprechenden Durchgangsstrom nach Austritt aus dem Wärmetauscher zusammengeführt. Vielmehr können beide Ströme getrennt voneinander verlaufen und ihrerseits mit etwaigen anderen Strömen in Wärmetausch gebracht werden. Die entsprechenden Betrachtungen gelten für entsprechenden Leitungen eines erfindungsgemäßen Wärmetauschers.

Allgemein ist es vorteilhaft, wenn die Menge des an dem Wärmetauscher vorbeigeführten ersten Bypasstroms und/oder die Menge des an dem Wärmetauscher vorbeigeführten zweiten Bypassstroms geregelt wird. Zu diesem Zweck kann zumindest eine der Bypassleitungen, insbesondere jedoch jede Bypassleitung, ein regelbares Durchflussventil aufweisen.

Es ist vorteilhaft, wenn die Menge des an dem Wärmetauscher vorbeigeführten ersten Bypassstroms auf eine vorgegebene Temperatur des aus dem Wärmetauscher austretenden ersten Ausgangsstroms geregelt wird, wenn der erste Bypassstrom mit dem ersten Durchgangsstrom nach Durchgang durch den Wärmetauscher zusammengeführt wird. Hierzu ist es zweckmäßig, wenn das regelbare Durchflussventil der ersten Bypassleitung in Wirkverbindung mit einem Temperatursensor zur Messung der Temperatur des ersten Ausgangsstroms steht. Auf diese Weise kann die Temperatur des ersten Ausgangsstroms auf einen vorgegebenen Temperaturwert geregelt werden, zu dessen Einhaltung die Durchflussmenge des ersten Bypassstroms geregelt wird. Alternativ kann auch die Temperatur des zweiten Ausgangsstroms für diese Art der Regelung verwendet werden. Hierzu sollte der zweite Durchgangsstrom mit dem zweiten Bypassstrom zu dem zweiten Ausgangsstrom nach Durchgang durch den Wärmetauscher zusammengeführt sein. Schließlich kann bei Wärmetauschern mit mehr als zwei Strömen sich die Temperaturmessung auch in einem Strom befinden, der weder einen Bypass zur Leistungsregelung noch einen Bypass zur Reduzierung von thermischen Spannungen, wie er hier erfindungsgemäß vorgeschlagen wird, hat.

Weiterhin ist es insbesondere vorteilhaft, wenn die Menge des an dem Wärmetauscher vorbeigeführten zweiten Bypasstroms auf einen vorgegebenen Grenzwert einer Temperaturdifferenz beispielsweise zwischen dem ersten Eingangsstrom oder dem ersten Durchgangsstrom und dem zweiten Durchgangsstrom geregelt wird. Hierzu steht das regelbare Durchflussventil der zweiten Bypassleitung in Wirkverbindung mit einem Temperaturdifferenzsensor zur Messung einer Temperaturdifferenz zwischen dem ersten Eingangsstrom oder dem ersten Durchgangsstrom und dem zweiten Durchgangsstrom. In dem oben genannten Beispiel tritt der erste Eingangs- bzw. Durchgangsstrom an derselben Seite in den Wärmetauscher ein, an der der zweite Durchgangsstrom aus dem Wärmetauscher austritt. Wenn die Temperaturdifferenz zwischen dem eintretenden und dem austretenden Strom einen vorgegebenen Grenzwert überschreitet, wird das regelbare Durchflussventil der zweiten Bypassleitung geöffnet, wodurch ein zweiter Bypassstrom entsteht, wobei die Durchflussmenge des zweiten Bypassstroms derart geregelt wird, dass der vorgegebene Grenzwert wieder unterschritten wird. Auf diese Weise ist sichergestellt, dass die Temperaturdifferenzen im Wärmetauscher auf einem geringen Niveau gehalten werden.

Anstelle der Temperaturdifferenz zwischen dem ersten Eingangs- bzw. Durchgangsstrom und dem zweiten Durchgangsstrom können auch andere Temperaturdifferenzen zur Messung und zur nachfolgenden Regelung des Durchflussventils der zweiten Bypassleitung heranzgezogen werden. Neben der beschriebenen Methode, eine Temperaturdifferenz zu errechnen kann jedoch auch unmittelbar ein absoluter Temperaturwert an einer geeigneten Stelle verwendet werden.

In diesem Zusammenhang sei nochmals darauf hingewiesen, dass durch Anpassung des ersten Bypassstroms die Wärmeübertragungsleistung geregelt werden kann, während durch Anpassung des zweiten Bypassstroms die Temperaturdifferenz im Wärmetauscher limitiert wird.

In einer alternativen vorteilhaften Ausführungsform wird die Menge des an dem Wärmetauscher vorbeigeführten zweiten Bypasstroms auf eine vorgegebene Temperatur an einer vorbestimmten Stelle in dem oder an dem Wärmetauscher geregelt. Hierzu steht das regelbare Durchflussventil der zweiten Bypassleitung in Wirkverbindung mit einem Temperatursensor zur Messung der Temperatur an besagter vorbestimmter Stelle in dem oder an dem Wärmetauscher. Sobald die Temperatur des Wärmetauschers an besagter Stelle einen vorgegebenen Wert überschreitet, wird die Durchflussmenge des zweiten Bypassstroms derart geregelt, dass der vorgegebene Temperaturwert wieder erreicht wird. Bei dem vorgegebenen Temperaturwert kann es sich auch um einen oberen Grenzwert handeln, wobei die Durchflussmenge des zweiten Bypassstroms dann derart geregelt wird, dass dieser Grenzwert unterschritten wird. Die vorbestimmte Stelle in dem oder an dem Wärmetauscher wird zweckmäßigerweise derart gewählt, dass diese Stelle an einer besonders sensitiven Stelle des Wärmetauschers, beispielsweise an bestimmten Rohrverbindungen, die einer besonders schnellen Alterung unterliegen, liegt.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

Figur 1 zeigt schematisch eine erste Ausführungsform eines erfindungsgemäßen Wärmetauschers und
Figur 2 zeigt eine zweite Ausführungsform eines erfindungsgemäßen Wäremtauschers.

Die Figuren werden übergreifend besprochen. Gleiche Bezugszeichen bezeichnen gleiche bzw. baugleiche Elemente.

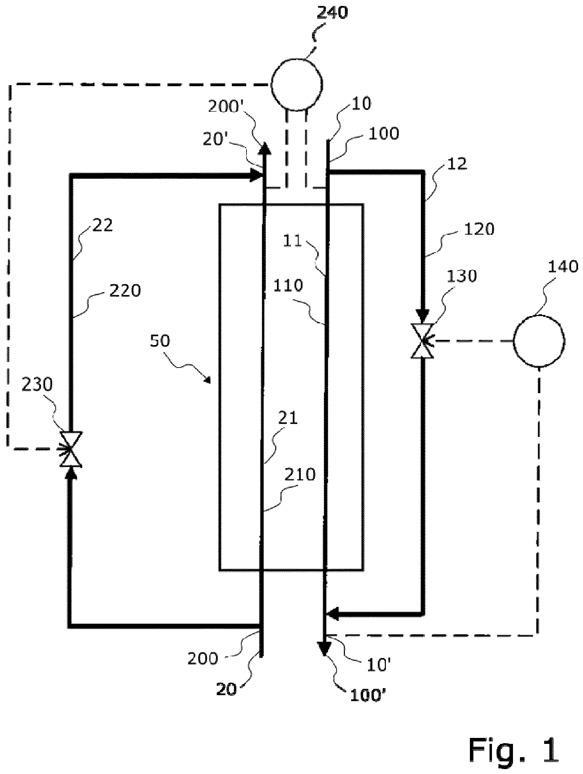

Der eigentliche Wärmetauscher ist in Figur 1 mit 50 bezeichnet und sehr schematisch in seinen Umrissen dargestellt. Im Gegenstrom werden zwei Ströme durch den Wärmetauscher 50 geleitet, wobei über den Wärmetauscher Wärme zwischen den Strömen ausgetauscht wird. Insbesondere wird Wärmemenge von einem warmen Strom auf einen kalten Strom übertragen.

Ein erster Eingangsstrom 10 wird in einer ersten Eingangsleitung 100 geleitet und vor Durchgang durch den Wärmetauscher 50 in einen ersten Durchgangsstrom 11 in einer ersten Durchgangsleitung 110 und in einen ersten Bypassstrom 12 in einer ersten Bypassleitung 120 aufgeteilt. Der erste Durchgangsstrom 11 wird in der ersten Durchgangsleitung 110 durch den Wärmetauscher 50 geleitet, während der erste Bypassstrom 12 in der ersten Bypassleitung 120 an dem Wärmetauscher 50 vorbeigeführt wird. Nach Durchgang durch den Wärmetauscher 50 wird der erste Durchgangsstrom 11 mit dem ersten Bypassstrom 12 in einem ersten Ausganggstrom 10' in einer ersten Ausgangsleitung 100' zusammengeführt. Beispielsweise handelt es bei dem ersten Eingangsstrom 10 um einen warmen Strom, der Wärme an einen zweiten Eingangsstrom 20 abgibt.

Die Menge des an dem Wärmetauscher 50 vorbeigeführten ersten Bypassstroms 12 wird in diesem Ausführungsbeispiel auf eine vorgegebene Temperatur des aus dem Wärmetauscher austretenden ersten Ausgangsstroms 10' geregelt. Hierzu weist die erste Bypassleitung 120 ein regelbares Durchflussventil 130 auf, das mit einem Temperatursensor 140 zur Messung der Temperatur des ersten Ausgangsstroms 10' in Wirkverbindung steht. Je nach vorgegebener Temperatur des ersten Ausgangsstroms 10' wird die Durchflussmenge des am Wärmetauscher 50 vorbeigeführten Bypassstroms 12 eingestellt. Auf diese Weise kann insbesondere die Temperatur des aus dem Wärmetauscher austretenden Ausgangsstroms 10' durch Zugabe des wärmeren Bypassstroms auf eine gewünschte Temperatur erhöht werden. Umgekehrtes gilt für den Fall, dass es sich bei dem ersten Eingangsstrom 10 um den kälteren Strom handelt.

In dem dargestellten Ausführungsbeispiel in Figur 1 ist eine zweite Eingangsleitung 200 für einen zweiten Strom 20', beispielsweise der kältere Strom, vorhanden, wobei die zweite Eingangsleitung 200 vor Durchgang durch den Wärmetauscher 50 in eine zweite Durchgangsleitung 210 für einen zweiten Durchgangsstrom 21 und eine zweite Bypassleitung 220 für einen zweiten Bypassstrom 22 aufgeteilt ist, wobei die zweite Durchgangsleitung 210 durch den Wärmetauscher geführt ist und die zweite Bypassleitung 220 außerhalb des Wärmetauschers geführt ist. Die zweite Durchgangsleitung 210 ist nach Austritt aus dem Wärmetauscher 50 mit der zweiten Bypassleitung 220 zu einer zweiten Ausgangsleitung 200' für einen zweiten Ausgangsstrom 20' zusammengelegt. Durch diese Maßnahme können die Temperaturdifferenzen in dem Wärmetauscher 50 auf einem geringen Niveau gehalten werden. Dadurch werden thermische Spannungen vermieden, die den Alterungsprozess des Wärmetauschers 50 sonst beschleunigen würden.

In dem dargestellten Ausführungsbeispiel weist die zweite Bypassleitung 220 ein regelbares Durchflussventil 230 auf, das mit einem Temperaturdifferenzsensor 240 in Wirkverbindung steht. Überschreitet die Temperaturdifferenz zwischen einem eintretenden und einem austretenden Strom einen vorbestimmten Grenzwert, wird das Durchflussventil 230 geöffnet, um einen Teil des zweiten Eingangsstroms 20 abzuzweigen und in Form des zweiten Bypassstroms 22 an dem Wärmetauscher 50 vorbeizuführen. Durch diese Maßnahme nimmt die Temperaturdifferenz zwischen erstem Durchgangsstrom 11 und zweitem Durchgangsstrom 21 ab. Entsprechend kann der Grenzwert der Temperaturdifferenz wieder unterschritten werden, sodass sichergestellt ist, dass die Temperaturdifferenzen im Wärmetauscher weiterhin niedrig gehalten werden. Im dargestellten Ausführungsbeispiel misst der Temperaturdifferenzsensor 240 die Temperaturdifferenz zwischen dem ersten Durchgangsstrom 11 und dem zweiten Durchgangsstrom 21. Bei Überschreiten eines vorbestimmten Grenzwertes der Temperaturdifferenz wird das regelbare Durchflussventil 230 geöffnet, um die Temperaturdifferenz auf einen Wert unterhalb des Grenzwertes einzustellen.

Es sind weitere Abwandlungen des in Figur 1 dargestellten Aufbaus möglich, die, ohne eigens dargestellt zu werden, hier kurz skizziert sein sollen. Bei dem in Figur 1 dargestellten Aufbau kann die zweite Bypassleitung 220 auch nicht mit der zweiten Durchgangsleitung 210 zusammengelegt sein, sodass diese beiden Leitungen getrennt von einander beispielsweise im Wesentlichen parallel in der Darstellung der Figur 1 verlaufen. In einer anderen Ausführungsvariante der Figur 1 steht das regelbare Durchflussventil 130 mit einem Temperatursensor 140 in Wirkverbindung, der nicht die Temperatur des ersten Ausgangsstroms 10', sondern die Temperatur des zweiten Ausgangsstroms 20' misst. In wiederum einer weiteren Ausführungsvariante der Figur 1 steht das regelbare Durchflussventil 130 mit einem Temperatursensor 140 zur Messung der Temperatur des zweiten Ausgangsstroms 20' in Wirkverbindung, wobei nunmehr die erste Durchgangsleitung 110 nicht mit der ersten Bypassleitung 120 zusammengeführt ist, sondern beide Leitungen getrennt voneinander verlaufen.

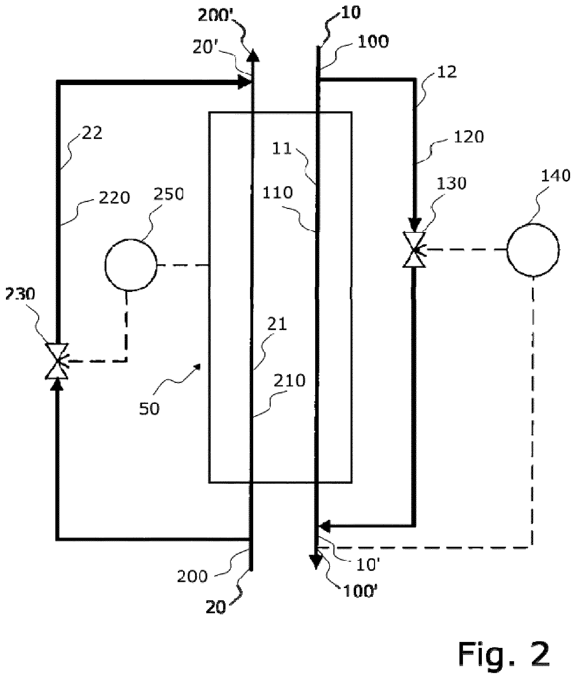

Figur 2 zeigt eine alternative Ausführungsform eines Wärmetauschers, wobei gleiche Bezugszeichen auf gleiche Elemente hinweisen. Die Regelung der Temperatur des ersten Ausgangsstrom 10' entspricht der Ausführungsform gemäß Figur 1 und soll daher nicht nochmals erläutert werden. Im vorliegenden Fall ist jedoch das regelbare Durchflussventil 230 in der zweiten Bypassleitung 220 mit einem Temperatursensor 250 verbunden, um die Durchflussmenge des zweiten Bypassstroms 22 auf eine vorgegebene Temperatur des Wärmetauschers 50 selbst zu regeln. Alternativ wird auf eine maximale Grenztemperatur des Wärmetauschers 50 geregelt. Der Temperatursensor 250 misst dabei zweckmäßigerweise die Temperatur an einer Stelle des Wärmetauschers 50, die dazu geeignet ist, thermische Spannungen verursachende Bedingungen anzuzeigen. Wird beispielsweise ein vorgegebener Grenzwert einer Temperatur an dieser Stelle überschritten, so öffnet das Durchflussventil 230, sodass ein zweiter Bypassstrom 22 an dem Wärmetauscher 50 vorbeigeführt wird, sodass die Temperaturdifferenz zwischen erstem Durchgangsstrom 11 und zweitem Durchgangsstrom 22 abnimmt.

Weite Ausführungsvarianten des Aufbaus gemäß Figur 2 seien hier nur kurz skizziert, ohne gesondert dargestellt zu werden. In dem Aufbau gemäß Figur 2 kann die zweite Bypassleitung 220 nicht mit der zweiten Durchgangsleitung 210 zusammengeführt sein, sondern beide Leitungen können getrennt voneinander beispielsweise parallel in der Darstellung gemäß Figur 2 verlaufen. In einer weiteren Ausführungsvariante der Figur 2 steht das Durchgangsventil 130 mit einem Temperatursensor 140 zur Messung der Temperatur nicht des ersten Ausgangsstroms 10', sondern des zweiten Ausgangsstroms 20' in Wirkverbindung. In einer wiederum weiteren Ausführungsvariante der Figur 2 steht wiederum das regelbare Durchflussventil 130 mit einem Temperatursensor 140 zur Messung der Temperatur des zweiten Ausgangsstroms 20' in Wirkverbindung, wobei nunmehr die erste Durchgangsleitung 110 und die erste Bypassleitung 120 nicht zu einer ersten Ausgangsleitung 100' zusammengeführt sind, sondern getrennt voneinander verlaufen.

## Patentansprüche

1. Verfahren zum Betreiben eines Wärmetauschers (50), durch den mindestens zwei Ströme geleitet werden, wobei
ein erster Eingangsstrom (10) zumindest zeitweise vor Durchgang durch den Wärmetauscher in einen ersten Durchgangsstrom (11) und einen ersten Bypassstrom (12) aufgeteilt wird, wobei der erste Durchgangsstrom (11) durch den Wärmetauscher geleitet und der erste Bypassstrom (12) an dem Wärmetauscher vorbeigeführt wird, und wobei
ein zweiter Eingangsstrom (20) zumindest zeitweise vor Durchgang durch den Wärmetauscher in einen zweiten Durchgangsstrom (21) und einen zweiten Bypassstrom (22) aufgeteilt wird, wobei der zweite Durchgangsstrom (21) durch den Wärmetauscher geleitet und der zweite Bypassstrom (22) an dem Wärmetauscher vorbeigeführt wird, und wobei nach Durchgang durch den Wärmetauscher der erste Durchgangsstrom (11) mit dem ersten Bypassstrom (12) in einen ersten Ausgangsstrom (10') zusammengeführt wird und/oder der zweite Durchgangsstrom (21) mit dem zweiten Bypassstrom (22) in einen zweiten Ausgangsstrom (20') zusammengeführt wird, wobei der erste und der zweite Durchgangsstrom (10, 20) im Wärmetauscher (50) miteinander in Wärmetausch treten.

2. Verfahren nach Anspruch 1, wobei die Menge des an dem Wärmetauscher (50) vorbeigeführten ersten Bypassstroms (12) und/oder die Menge des an dem Wärmetauscher vorbeigeführten zweiten Bypassstroms (22) geregelt wird.

3. Verfahren nach Anspruch 2, wobei die Menge des an dem Wärmetauscher (50) vorbeigeführten ersten Bypassstroms (12) auf eine vorgegebene Temperatur des aus dem Wärmetauscher austretenden ersten Ausgangsstroms (10') geregelt wird, wenn der erste Bypassstrom (12) mit dem ersten Durchgangsstrom (11) nach Durchgang durch den Wärmetauscher zu dem ersten Ausgangsstrom (10') zusammengeführt wird, oder die Menge des an den Wärmetauscher (50) vorbeigeführten ersten Bypassstroms (12) auf eine vorgegebene Temperatur des aus dem Wärmetauscher (50) austretenden zweiten Ausgangsstroms (20') geregelt wird, wenn der zweite Bypassstrom (22) mit dem zweiten Durchgangsstrom (21) nach Durchgang durch den Wärmetauscher (50) zu dem zweiten Ausgangsstrom (20') zusammengeführt wird.

4. Verfahren nach Anspruch 2 oder 3, wobei die Menge des an dem Wärmetauscher (50) vorbeigeführten zweiten Bypassstroms (22) auf einen vorgegebenen Grenzwert einer Temperaturdifferenz zwischen dem ersten Eingangsstrom (10) und dem zweiten Durchgangsstrom (21) oder zwischen dem in den Wärmetauscher eintretenden ersten Durchgangsstrom (11) und dem aus dem Wärmetauscher austretenden zweiten Durchgangsstrom (21) geregelt wird.

5. Verfahren nach Anspruch 2 oder 3, wobei die Menge des an dem Wärmetauscher (50) vorbeigeführten zweiten Bypassstroms (22) auf eine vorgegebene Temperatur an einer vorbestimmten Stelle in dem oder an dem Wärmetauscher (50) geregelt wird.

6. Wärmetauscher (50) mit Leitungen zur Durchleitung mindestens zweier Ströme durch den Wärmetauscher, wobei
eine erste Eingangsleitung (100) für einen ersten Eingangsstrom (10) vorhanden ist, wobei die erste Eingangsleitung (100) vor Durchgang durch den Wärmetauscher in eine erste Durchgangsleitung (110) für einen ersten Durchgangsstrom (11) und eine erste Bypassleitung (120) für einen ersten Bypassstrom (12) aufgeteilt ist, wobei die erste Durchgangsleitung (110) durch den Wärmetauscher geführt ist und die erste Bypassleitung (120) außerhalb des Wärmetauschers geführt ist, und wobei eine zweite Eingangsleitung (200) für einen zweiten Eingangsstrom (20) vorhanden ist, wobei die zweite Eingangsleitung (200) vor Durchgang durch den Wärmetauscher in eine zweite Durchgangsleitung (210) für einen zweiten Durchgangsstrom (21) und eine zweite Bypassleitung (220) für einen zweiten Bypassstrom (22) aufgeteilt ist, wobei die zweite Durchgangsleitung (210) durch den Wärmetauscher geführt ist und die zweite Bypassleitung (220) außerhalb des Wärmetauschers geführt ist, wobei die erste Durchgangsleitung (110) nach Austritt aus dem Wärmetauscher (50) mit der ersten Bypassleitung (120) zu einer ersten Ausgangsleitung (100') zusammengelegt ist und/oder die zweite Durchgangsleitung (210) nach Austritt aus dem Wärmetauscher mit der zweiten Bypassleitung (220) zu einer zweiten Ausgangsleitung (200') zusammengelegt ist, wobei die erste Durchgangssleitung (110) und die zweite Durchgangsleitung (210) derart im Wärmetauscher (50) angeordnet sind, dass der erste und der zweite Durchgangsstrom (11, 21) im Wärmetauscher (50) miteinander in Wärmetausch treten.

7. Wärmetauscher (50) nach Anspruch 6, wobei jede Bypassleitung (120, 220) ein regelbares Durchflussventil (130, 230) aufweist.

8. Wärmetauscher (50) nach Anspruch 7, wobei das regelbare Durchflussventil (130) der ersten Bypassleitung (120) in Wirkverbindung mit einem Temperatursensor (140) zur Messung der Temperatur des ersten Ausgangsstroms (10') oder des zweiten Ausgangsstroms (20') steht.

9. Wärmetauscher (50) nach Anspruch 7 oder 8, wobei das regelbare Durchflussventil (230) der zweiten Bypassleitung (220) in Wirkverbindung mit einem Temperaturdifferenzsensor (240) zur Messung einer Temperaturdifferenz zwischen dem ersten Eingangsstrom (10) und dem zweiten Durchgangsstrom (21) oder zwischen dem in den Wärmetauscher eintretenden ersten Durchgangsstrom (11) und dem aus dem Wärmetauscher austretenden zweiten Durchgangsstrom (21) steht.

10. Wärmetauscher (50) nach Anspruch 7 oder 8, wobei das regelbare Durchflussventil (230) der zweiten Bypassleitung (220) in Wirkverbindung mit einem Temperatursensor (250) zur Messung der Temperatur an einer vorbestimmten Stelle in dem oder an dem Wärmetauscher (50) steht.
